# EUROPEAN PATENT SPECIFICATION

(11) **EP 2 702 119 B1**
(45) Date of publication and mention of the grant of the patent: **28.10.2015**
(21) Application number: 12716045.5
(22) Date of filing: 24.04.2012
(51) Int. Cl.: C09K 21/00, B32B 5/30, B32B 27/30, E04B 1/94

(54) **FIRE RETARDANT POLYSTYRENE**
FEUERHEMMENDES POLYSTYROL
POLYSTYRÈNE IGNIFUGE

(30) Priority: 28.04.2011 EP 11164093
(43) Date of publication of application: 05.03.2014
(73) Proprietor: Ineos Styrenics International SA, 1700 Fribourg (CH)
(72) Inventor: RAUNIYAR, Govind, NL-4706 HP Roosendaal (NL); VAN LIEMT, Willem, NL-4851 EP Ulvenhout (NL)
(74) Representative: Smith, Julian Philip Howard
(86) International application number: PCT/EP2012/057448
(87) International publication number: WO 2012/146577

(56) References cited:
- WO-A1-2008/145599
- WO-A1-2009/059957
- US-A1- 2008 038 516

## Description

This invention relates to fire retardant polystyrene, in particular fire retardant polystyrene foams.

Polystyrene (PS) foams have a favourable combination of properties for use in construction, including:
- very low water permeability
- very high water resistance
- very good thermal insulation value, constant over the product lifespan (40 years plus)
- excellent sound insulation
- high constructive strength at minimal weight or density

Polystyrene is an intrinsically combustible material, and good fire retardancy for polystyrene foams is generally achieved by the use of specific fire-retardant additives to the polymer, or by a combination of the polystyrene foam parts with other materials used in construction. In these product types and combinations, polystyrene foams have achieved a well-earned reputation as safe and very efficient construction/insulation materials.

In recent years, there has been an emerging need for increased fire retardant properties in base materials used in building and construction. An important requirement for this is that a construction material retains its structural integrity for as long as possible in a fire. Typically, the insurance fire tests (eg as defined by the LPC Design Guide for the Fire Protection of Buildings, Appendix B, LPS 1181: Part 1) are more stringent than those applied by the national and European legislation (Small flame test, Single Burning item, etc.), especially as regards the length of time of exposure to fire conditions. Standard fire-retardant polystyrene foam generally does not pass the severest of these tests.

Therefore, there remains a strong need for a polystyrene foam product which has the combination of beneficial properties as indicated above, as well as an improved retention of structural stability when exposed to fire.

There are many examples of construction products having very good fire retardance, in which polystyrene foam is integrated with other materials like wood, metal, mineral wool, polyisocyanurate or polyphenol. These compounds have in common that the first stage reaction of the product to fire is very well managed (by, for example, lamination with a poorly combustible material). However, at higher temperatures in a continuing fire situation (200-300°C) the polystyrene on the inside of the product will melt. This results in the collapse of the foam structure and possibly of the overall product structure. In particular, if such materials are used in poorly designed roof constructions, droplets of burning polystyrene can fall from the construction.

In these applications, the polystyrene foam can be virgin, or can be prepared with a so-called fire retardant additive. The most common examples of fire-retardant additives for polystyrene foam are organohalogen compounds such as hexabromocyclododecane, brominated styrenic polymers such as styrene-butadiene copolymers, and derivatives of tetrabromobisphenol A tribromophenyl allylether.

An alternative approach to increasing the fire retardancy of polystyrene foams has been to change the intrinsic combustion and temperature behaviour of the polystyrene foam itself. For solid, non-foamed polystyrene there are many publications on this subject: for example, so-called charring and intumescent packages can be added to solid polystyrene to change the burning behaviour dramatically (Georlette, P., Simons, J., Costa, L. in "Fire retardancy of polymeric materials", Grand & Wilkie, Eds, Marcel Dekker, New York, 2000, p. 245-283). For polystyrene foams however, this approach has been much more difficult. EP 834529A teaches the addition of phosphorous-containing organic materials and magnesium for improving the fire-retardant behaviour of PS foam. However, the fire behaviour was only minimally improved at a very high loading of fire retardant. Generally, the attempts to alter the burning behaviour of PS foam by adding so-called charring and intumescent agents to the resin or the polymerization have suffered from this problem.

As a third approach, polystyrene foam in the shape of expanded polystyrene foam beads can be mixed with a polyphenol resin and compressed into foam sheets having excellent fire retardancy. However these materials lose much of the performance of the original polystyrene foams - for example they are notably more brittle, and the water absorption is increased.

It is also known to improve the fire retardancy of polystyrene foam by treating expandable polystyrene (EPS) beads with either an intumescent package or clay/silicate resins such as waterglass. Whilst these materials again show increased fire retardant performance, and have the benefit that the processes for their production are compatible with current production processes, the quantity of fire retardant material required is usually high enough that much of the intrinsic polystyrene foam performance (as highlighted above) is lost in the new product.

Our own EP 2152789A discloses articles made of expanded polystyrene foam having a bulk density (or apparent density) ranging from 5 to 200 kg/m³, which are produced from a composition comprising expanded or expandable polystyrene beads or particles, an intumescent material, and a fire-resistant binder. It was found that coating the polystyrene beads in an intumescent material and a fire-resistant binder resulted in a product with improved fire retardant behaviour. One disadvantage of this formulation can be that the presence of certain fire-resistant binders in the polystyrene results in an increase in moulding time, which is disadvantageous for production.

We have subsequently found that the mechanical properties of articles made from a composition comprising expanded or expandable polystyrene beads or particles, an intumescent material and a fire-resistant binder can be improved without significant loss of fire retardant performance if they are in the form of a layer of conventional expanded polystyrene beads attached to a layer of the composition comprising beads, intumescent material and fire-resistant binder. Use of such a layered structure can also overcome the problem of increased moulding times.

Accordingly in a first aspect the present invention provides an article comprising expanded polystyrene foam, which comprises:
a first layer comprising at least 90wt% of expanded polystyrene beads or particles, and
a second layer attached to the first layer comprising 25-75wt% of expanded polystyrene beads or particles, an intumescent material, and a fire-resistant binder,
wherein the thickness of the first layer is at least 20% of the total thickness of the article, and the second layer has a thickness of at least 5mm.

The thickness of the second layer is preferably at least 1% of the total thickness. Typically it has an thickness of between 5mm and 100mmm, preferably between 5mm and 50mm, and most preferably between 10mm and 30mm.

The thickness of the first layer is generally dictated by the required total thickness of the article. Its thickness is preferably at least 75% of the total thickness of the article, and preferably at least 80% of the total thickness. It may comprise at least 90% or even at least 95% of the total thickness: this is particularly the case for articles having a total thickness of 100mm or more. The absolute thickness of the first layer is generally between 15mm and 400mm, more usually between 20mm and 300mm.

By "expanded polystyrene beads or particles" is meant beads or particles obtained by expanding polystyrene as defined hereinbelow together with any additives present. Accordingly compounds added to the polystyrene prior to expansion are generally incorporated within the polystyrene as it expands, and are considered to be part of the expanded polystyrene beads or particles. By contrast any compounds added subsequent to the expansion, such as the fire-resistant binder and intumescent material, are considered to be separate from the expanded polystyrene beads or particles.

The fire-resistant binder in the second layer is preferably applied as a liquid or a paste capable of i) carrying and distributing the intumescent homogeneously over the foamed bead surface, ii) helping to adhere the intumescent to the bead surface and iii) producing a residue of non-combustible material upon heating by fire. The fire-resistant binder can be organic or inorganic. It can be for example a metal silicate or metal aluminosilicate or a zeolite. Preferred are inorganic binders based on silicate and water, where silicate is understood to be any of numerous compounds containing silicon, oxygen, and one or more metals. Generally, silicates consist of SiO₂ or SiO₄ groupings combined with one or more metals and sometimes hydrogen, with the addition of ions such as aluminium, maganesium, calcium, sodium, or other metals. According to the combination ratio Na₂O/SiO₂, they can be divided into various products. For example, liquid sodium silicate, called water glass, is a viscous alkaline and transparent solution in which the SiO₂ to Na₂O ratio varies. Also well known are the zeolites, hydrated aluminium silicates of calcium sodium or potassium. When based on calcium as additional salt source, binders can even be cement, lime or gypsum. Particularly preferred are alkali metal silicates for example sodium or potassium silicate preferably sodium silicate. Organic binders can for example consist of mixtures of phenolic resins and water, polyurethane dispersions, or melamine-based liquid mixtures. As an example, a mixture of sodium silicate and water can function as a fire-resistant binder, but also eg mixtures of water and zeolites, phenol derivatives (e.g. polyphenols, phenol-formaldehyde resins) or char-forming salts (eg as disclosed in GB 2101644).

The fire-resistant binder can also be in the form of a gel or a sol-gel particularly when the binder is a silicate or zeolite. A gel is a colloidal suspension in which a porous skeleton encloses a liquid phase. The fire-resistant binder may be applied as a gel-forming composition comprising a silicate or aluminosilicate which may optionally also comprise an organic liquid in particular an organic liquid that is water-immiscible. The gel-forming composition can be formed *in situ* by adding a metal silicate with a metal aluminate preferably in water.

By "intumescent material" is meant a composition which, upon heating or exposure to fire, produces a foamed char layer many times its original volume. Such materials are typically used in passive fire protection and are usually endothermic, and can contain chemically bound water. Examples include ammonium polyphosphate/pentaerythritol mixtures, melamine, guanidines, chloroparaffins, phosphines, phosphonates, resin binders, nanoclays, expandable glass beads (e.g. Expancell commercially available from Akzo), and expandable graphite.

Typical examples of intumescents include nanoclays and graphite, preferably expandable graphite.

The first layer may optionally also contain a fire-resistant binder and an intumescent material as defined above. Amounts of each are limited by the requirement that the amount of polystyrene beads in the first layer must be at least 90wt%.

The construction of materials suitable for use as the second layer is described in detail in EP 2152789A.

The expanded polystyrene beads or particles (hereinafter referred to as beads) utilised in both layers are formed typically by heat treatment of expandable polystyrene (e.g. as described in "Modern Styrenics Polymers, Scheirs & Priddy, eds. Wiley, New York 2003). Expandable polystyrene is understood to be a composition which comprises a blowing agent and which is capable of expansion by virtue of the presence of the blowing agent. The composition may be in the form of particles or, preferably, of expandable beads. By beads are meant elliptical, spherical or substantially spherical particles, in particular spheroidal particles which may have a large diameter and a small diameter, with a ratio between the large diameter and the small diameter ranging in particular from 1.0 to 1.3, preferably from 1.0 to 1.2. The expandable particles or beads may have an average size ranging from 0.3 to 3 mm, preferably from 0.3 to 2 mm, in particular from 0.4 to 1.5 mm. They may also have a bulk density (or apparent density), measured according to method ASTM D 1622, ranging from 550 to 720 kg/m³, preferably from 580 to 710 kg/m³, in particular from 600 to 770 kg/m³.

The polystyrene from which the expanded polystyrene beads utilised in both layers are formed comprises a styrene polymer containing at least 50%, preferably at least 80% and in particular at least 90% by weight of styrene. It may be a styrene homopolymer, or a copolymer. Comonomer or comonomers present in the styrene copolymer may be selected from vinylaromatic compounds, in particular from alpha-methyl styrene, a styrene halogenated on the aromatic ring or a styrene alkylated on the aromatic ring, (meth)acrylic acid, C₁ to C₄ alkyl esters of (meth)acrylic acid such a methyl acrylate, methyl methacrylate, ethyl acrylate, ethyl methacrylate, isopropyl acrylate or butyl acrylate, amides and nitriles of (meth)acrylic acid such as acrylamide, methacrylamide, acrylonitrile or methacrylonitrile, butadiene, ethylene, divinylbenzene and maleic anhydride. The polystyrene may optionally be a blend of polystyrene and one or more other polyolefins: an example of such a blend is ARCEL, available from NOVA Chemicals. Alternatively it may be a blend of polystyrene and polyphenylene oxides, an example of which is NORYL, also available from Sabic Innovative Plastics.

It is preferred that the polystyrene from which the expanded polystyrene beads utilised in both layers are formed comprises a homopolymer of styrene. The weight-average molecular weight Mw of the styrene polymer may be in a range extending from 150000 to 450000 daltons, preferably from 160000 to 400000 daltons, and in particular from 170000 to 300000 daltons. The molecular weight distribution Mw/Mn, where Mn is the number-average molecular weight of the polymer, may range from 1.5 to 4.0, preferably from 1.7 to 3.5, and in particular from 1.8 to 3.0. The polystyrene advantageously has a relatively low level of residual monomer and, where appropriate, of residual comonomer(s).

Prior to expansion, the expandable polystyrene composition typically comprises, per 100 parts by weight of styrene polymer, from 2 to 20 parts, preferably from 3 to 15 parts and in particular from 3 to 10 parts by weight of at least one blowing agent. The blowing agent may be selected from aliphatic or cyclic, optionally fluorinated, hydrocarbons, carbon dioxide, water and mixtures of two or more of these compounds. More particularly it may be selected from freons, linear or branched saturated hydrocarbons and cyclic saturated hydrocarbons, preferably C₃ to C₇ hydrocarbons, in particular C₄ to C₆ hydrocarbons, such as n-butane, isobutane, n-pentane, isopentane, n-hexane or isohexane, carbon dioxide, water and mixtures of two or more of these compounds, especially mixtures of two or more of these hydrocarbons, mixtures of carbon dioxide with water, mixtures of carbon dioxide with at least one of these hydrocarbons, or mixtures of water with at least one of these hydrocarbons and, optionally, carbon dioxide.

The expanded polystyrene beads of both layers may contain, in addition to the polystyrene, athermanous material, that is to say a material which improves the thermal insulation properties of the beads. Examples of athermanous materials include metal oxides, metal powder, calcinated petroleum coke, carbon black, carbon nanotubes and graphite. Expanded polystyrene beads and compositions formed therefrom which contain athermanous material include commercial products such as EPS Silver, Neopor, Lambdapor and Galileo. Preferably the amount of athermanous material is in the range 0.5-25wt%, more preferably 1-10wt%, based on the weight of the polystyrene, subject to the minimum levels of polystyrene required for each layer according to the invention.

As mentioned previously, the athermanous material, as well as the additives mentioned below, are considered to be part of the "expanded polystyrene beads or particles" in the layers of the article according to the invention.

The expanded polystyrene beads of both layers may optionally further contain at least one additive selected from flame retardants, nucleating agents, plasticizers and agents which facilitate the demoulding of the moulded and expanded articles. The flame retardant is preferably a halogenated hydrocarbon, in particular a halogenated C₆ to C₁₂ hydrocarbons, the preferred halogen being bromine. Examples include *organohalogen* compounds such as hexabromocyclododecane, hexabromocyclohexane, brominated styrenic polymers such as styrene-butadiene copolymers, and derivatives of tetrabromobisphenol A tribromophenyl allylether. The amount of flame retardant may be from 0.05 to 2 wt%. preferably from 0.1 to 1.5 wt%, based on the weight of the styrene polymer. The beads may further contain at least one nucleating agent selected in particular from synthetic waxes, in particular Fischer-Tropsch waxes and polyolefin waxes such as polyethylene waxes or polypropylene waxes, in an amount which can range from 0.05 to 1 wt%, preferably from 0.1 to 0.5 wt%, based on the weight of the styrene polymer. The beads may likewise contain at least one plasticizer, selected in particular from mineral oils and petroleum waxes such as paraffin waxes, in an amount that can range from 0.1 to 1 wt%, preferably from 0.1 to 0.8 wt%, based on the weight of the styrene polymer. The beads may additionally contain at least one agent which facilitates the demoulding of the moulded and expanded articles, for example inorganic salts or esters of stearic acid, such as glycerol mono-, di- or tristearates and zinc stearate, calcium stearate or magnesium stearate: the amount may range from 0.05 to 1 wt%, preferably from 0.1 to 0.6 wt%, based on the weight of the styrene polymer.

Processes for preparing the polystyrene compositions from which the beads used in both layers are made are well known in the art. Typically the process comprises a step of polymerising styrene and optionally at least one comonomer in aqueous suspension, followed by a step of separating off and eliminating the aqueous phase, and isolating the composition in the form of expandable particles or beads. The polymerisation in aqueous suspension may be carried out with stirring, in the presence of at least one free-radical polymerization initiator, at least one suspension stabilizer, and also a blowing agent or agents.

Polymerisation in aqueous suspension may be carried out at a temperature ranging from 70 to 150°C, preferably from 85 to 140°C. It may be carried out with a weight ratio between the water and the styrene and optionally the comonomer(s) ranging from 0.8/1 to 5/1, preferably from 0.9/1 to 4/1.

Particularly preferred free-radical polymerization initiators are selected from cumylhydroperoxide, peresters, such as tert-butyl peroxy-2-ethylhexanoate, tert-butyl peroxyneodecanoate, tert-butyl peroxypivalate, tert-butyl peroxydiethylacetate, tert-butyl peroxyisobutyrate, tert-butyl peroxy-3,5,5-trimethylhexanoate, cumyl peroxyneodecanoate, tert-amyl peroxy-2-ethylhexanoate, tert-amyl peroxyneodecanoate, tert-amyl peroxypivalate, 2,5-bis(2-ethylhexanoylperoxy)-2,5-dimethylhexane or 2,4,4-trimethylpentyl-2-peroxyneodecanoate, or else from difunctional or polyfunctional free-radical initiators, such as 1,1-bis(tert-butylperoxy)-3,3,5-trimethylcyclohexane, 1,1-bis(tert-butylperoxy)cyclohexane, 2,5-bis(tert-butylperoxy)2,5-dimethylhexane, 2,2-bis(tert-butylperoxy)butane or bis(tert-butylperoxyisopropyl)benzene. The above initiators enable a high yield of polymer even in the presence of carbon black, which is optionally added as an athermanous component of the composition, and which is known to be a polymerisation inhibitor.

Polymerization in aqueous suspension may be carried out in the presence of other additives, selected from chain transfer agents such as mercaptans and the dimers of alpha-methylstyrene, flame retardants such as halogenated hydrocarbons; preferably brominated hydrocarbons, in particular those mentioned above, crosslinking agents such as butadiene or divinylbenzene, plasticizers and nucleating agents, especially those mentioned above.

The polystyrene composition thus formed is used for producing expanded beads, which are typically produced by a process comprising the following steps:
(i) a step of pre-expansion (or prefoaming) by contacting and mixing the composition, in particular in the form of expandable particles or expandable beads, with steam, in particular in a stirred tank and in particular under pressure and temperature conditions capable of forming expanded particles or beads having in particular a bulk density (or apparent density) ranging from 5 to 200 kg/m³, preferably from 5 to 100 kg/m³ and in particular from 5 to 50 or to 30 kg/m³, for example at a temperature ranging from 80 to 110°C, or from 85 to 105°C, and under an absolute pressure which can range from 10 to 160 kPa, or from 50 to 150 kPa, and
(ii) optionally, a step of stabilising the particles or beads (maturation) thus expanded, by contacting them with ambient air, in particular at a temperature ranging from 0 to 40°C, and under an absolute pressure which can range from 50 to 130 kPa, preferably from 80 to 120 kPa, for a time which can range from a few hours to a few days, for example from 4 hours to 3 days, such as in particular to attain an equilibrium between the ambient air and the internal atmosphere of the expanded particles or beads.

If fire-resistant binder and intumescent material are to be incorporated, they are preferably mixed with the expanded beads at this stage; it is important to achieve good distribution of both within the foam composition. The intumescent material and fire-resistant binder can be added separately or as a mixture. The mixing process may be carried out at a temperature in the range 0°C -100°C, preferably 10°C-75°C, and most usually at ambient temperature. The beads are then dried, and subsequently moulded to form the article of the invention. In one alternative embodiment of the invention however, the fire-resistant binder and intumescent material are applied to an already moulded expanded polystyrene article by impregnation, spraying or dipping in a bath. In this case the fire-resistant binder and intumescent material can be caused to permeate the article by for example placing it in a container (e.g. a bag) through which a liquid solution or slurry of binder and intumescent material is allowed to pass by gravity or through a pumping action.

The fire-resistant binder is preferably used in solution, which is preferably aqueous. However other solvents or carriers for the fire-resistant binder can be used. When the fire-resistant binder is applied as a solution, the concentration of the binder in the solution is in the range 2-80wt%, preferably 10-70wt% more preferably 15-50wt%.

The article of the invention preferably has a bulk density (or apparent density) measured according to method ASTM D 1622 of from 5 - 200 kg/m³, preferably 5 - 100 kg/m³. Most preferred is a range of 5 - 50 kg/m³, and in particular 5 - 30 kg/m³.

Moulding the particles or beads of expanded polystyrene is typically carried out by introducing them into a moulding machine such as a Teubert Type MA 901/902/903 machine in the form of adjacent layers of the beads required for the first and second layers respectively, and then heating the mould so as to weld the particles or beads to one another, at a temperature typically ranging from 80 to 120°C. The heating medium is conveniently dry steam. The result is a moulded article generally having the desired bulk density (or apparent density) which is preferably substantially identical to that of the pre-expanded particles or beads. To produce the two-layer article of the invention, the mould is first filled to the required level with the expanded polystyrene beads or particles intended to be used in the first layer. The beads or particles for the second layer are then injected into one side of the mould to form a second layer adjacent the first layer. The mould is then heated to fuse the beads and thereby form the article.

In the second layer the weight of expanded polystyrene beads or particles as a percentage of the total weight of said beads, the intumescent material and the fire-resistant binder is preferably 25 - 60wt%, more preferably 35 - 45wt%. The proportion of the intumescent material as a percentage of the total weight of the beads, the intumescent material and the binder is preferably in the range 10 - 30wt%, more preferably 15-25wt%, for example 17 - 23wt%. The proportion of the fire-resistant binder as a percentage of the total weight of the beads, the intumescent material and the binder is preferably in the range 30 - 50wt%, more preferably 35-45wt%, for example 37 - 43wt%. For the avoidance of doubt the weight of the fire-resistant binder does not include the weight of any liquid solvent or carrier.

Whilst the invention has been described in terms of two layers, additional layers comprising either expanded polystyrene beads or other materials may also be present. In one embodiment of the present invention, the article of the invention additionally comprises a layer of construction material attached to the first layer on a surface different from that to which the second layer is attached. Examples of such a construction material include gypsum, iron board, aluminium or some other metallic material.

### EXAMPLES

Four formulations of expanded polystyrene beads were prepared in the following manner:
A (second layer in the composition of the invention): This was produced by mixing 4 kg of expanded polystyrene beads having a bulk density of 13 kg/m³ with 10 kg of water glass and 1.6 kg of expandable graphite using a standard mixer. The coated beads were dried in a fluidised bed dryer and then moulded to form a board of 28 kg/m³ density.
B (first layer in the composition of the invention): This was a standard fire-retardant board of expanded polystyrene having a density of 15 kg/m³ and less than 1wt% of a brominated fire-retardant additive.
C (first layer in the composition of the invention): This was a standard fire-retardant board of expanded polystyrene having a density of 15 kg/m³ and less than 1wt% of a brominated fire-retardant additive, and additionally contained an athermanous additive.
D (first layer in the composition of the invention): This was a standard board of expanded polystyrene having a density of 15 kg/m³ and not containing any fire-retardant additive.

Boards having a length of 1000mm and width of 500mm were moulded in a shape moulding machine at a temperature of 100-115°C. The moulding cycle time was 1-2 minutes. Apart from Example 1 which contained only formulation D, the boards contained varying proportions of formulations A, B and C. Those containing two layers were formed by first filling the mould with beads of B or C up to the desired thickness, then closing the mould at the required total thickness, and subsequently injecting beads of A to fill up the remaining space inside the mould adjacent the beads of B or C. Details of the boards are given in Table 1 below.

The boards of Examples 1-8 in Table 1 were subjected to a fire test using a naked flame of 200mm length obtained using a propane burner. One side of the board was exposed to the flame for at least 1 minute: in the case of the two-layer boards of the invention, the side formed of layer A, the layer containing the intumescent material and fire-resistant binder, was exposed to the flame - not the opposite layer. The results are shown in Table 1.

**TABLE 1**

| EXAMPLE | Thickness (mm) | A (mm) | B (mm) | C (mm) | D (mm) | Results of fire test |
|---|---|---|---|---|---|---|
| 1 (comp) | 130 | - | - | - | 130 | Burns |
| 2 (comp) | 130 | - | 130 | - | | Melts away to form a hole |
| 3 (comp) | 130 | 130 | - | - | | No ignition |
| 4 | 130 | 20 | 110 | - | - | No ignition |
| 5 | 120 | 20 | - | 100 | - | No ignition |
| 6 | 100 | 10 | - | 90 | - | No ignition |
| 7 | 200 | 5 | 195 | - | - | No ignition |
| 8 | 400 | 5 | 395 | - | - | No ignition |

In all the cases where no ignition was observed, a swollen charred layer formed on the surface exposed to the flame.

It can be seen from Table 1 that in boards made from compositions which do not contain a layer of the expanded polystyrene beads coated with an intumescent material and a fire-resistant binder, burning or melting occurs, even if those compositions contain a standard brominated fire retardant. However in boards which have on the surface exposed to the flame even a thin (eg 5mm out of 400mm) layer of the composition comprising expanded polystyrene beads coated with an intumescent material and a fire-resistant binder, there is no ignition.

The compressive strength of a number of boards was also determined according to EN 826 testing procedure, with the results shown in Table 2 below.

**TABLE 2**

| EXAMPLE | Board thickness (mm) | Layer A (mm) | Layer B (mm) | Layer D (mm) | Compressive strength (kPa) |
|---|---|---|---|---|---|
| 9 | 30 | 30 | - | - | 92 |
| | 32 | 30 | - | 2 | 95 |
| | 50 | 30 | - | 20 | 97 |
| | | | | | |
| 10 (comp) | 23 | 23 | - | - | 54 |
| | 29 | 29 | - | - | 56 |
| | 50 | 50 | - | - | 70 |
| | | | | | |
| 11 (comp) | 30 | | - | 30 | 82 |
| | 50 | | - | 50 | 84 |

The above data shows that the compressive strength of the board of the invention (Example 9) is higher than that of a board made either entirely of fire resistant material A (comparative Example 10), or one made entirely of a non-fire resistant expanded polystyrene (comparative Example 11). This is true over the range of thicknesses tested, and the fact that the strength of two-layer Example 9 is better than the strength of both layers individually (Examples 10 and 11) is a particularly surprising result.

In summary it can be seen that the 2-layer structure of the invention can provide articles having fire resistant properties which match those of an equivalent article made entirely from fire resistant material such as A, whilst at the same time having superior compressive strength.

## Claims

1. Article comprising expanded polystyrene foam, which comprises:
a first layer comprising at least 90wt% of expanded polystyrene beads or particles, and
a second layer attached to the first layer comprising 25-75wt% of expanded polystyrene beads or particles, an intumescent material, and a fire-resistant binder,
wherein the thickness of the first layer is at least 20% of the total thickness of the article, and the second layer has a thickness of at least 5mm.

2. Article according to claim 1, wherein the thickness of the first layer is at least 75% of the total thickness of the article, and preferably at least 80% of the total thickness.

3. Article according to claim 1 or 2, wherein the thickness of the first layer is between 15mm and 400mm, preferably between 20mm and 300mm.

4. Article according to any preceding claim, wherein the thickness of the second layer is at least 1% of the total thickness of the article.

5. Article according to any preceding claim, wherein the thickness of the second layer is between 5mm and 100mmm, preferably between 5mm and 50mm, and most preferably between 10mm and 30mm.

6. Article according to any preceding claim, wherein the intumescent material comprises at least one of ammonium polyphosphate/pentaerythritol mixtures, melamine, guanidines, chloroparaffins, phosphines, phosphonates, resin binders, nanoclays, expandable glass beads or expandable graphite..

7. Article according to any preceding claim, wherein the fire-resistant binder comprises a phenol resin, polyurethane dispersion, polyphenol or a phenol-formaldehyde resin.

8. Article according to any of claims 1 to 6, wherein the fire-resistant binder comprises a metal, silicate, metal aluminate, metal aluminosilicate or zeolite, preferably sodium silicate.

9. Article according to any preceding claim, wherein in the second layer the proportion of the expanded polystyrene beads or particles as a percentage of the total weight of said beads, the intumescent material and the fire-resistant binder is 35 - 45wt%.

10. Article according to any preceding claim, wherein in the second layer the proportion of the intumescent material as a percentage of the total weight of the beads, the intumescent material and the binder is 15 - 25wt%.

11. Article according to any preceding claim, wherein in the second layer the proportion of the fire-resistant binder, excluding any liquid solvent or carrier, as a percentage of the total weight of the beads, the intumescent material and the binder is 35-45wt%.

12. Article according to any preceding claim, wherein one or both of the first and second layers additionally contains an athermanous material, preferably a metal oxide, metal powder, calcinated petroleum coke, carbon black, carbon nanotube or graphite.

## Patentansprüche

1. Artikel aus expandiertem Schaumpolystyrol, der Folgendes umfasst:
eine erste Schicht aus mindestens 90 Gew.-% expandierte Polystyrol-Kügelchen oder - Partikel
und
eine zweite, an der ersten Schicht befestigte Schicht, 25 bis 75 Gew.-% expandierte Polystyrol-Kügelchen oder -Partikel, ein intumeszierendes Material, ein feuerfestes Bindemittel,
wobei die Dicke der ersten Schicht mindestens 20 % der Gesamtdicke des Artikels ausmacht, und die zweite Schicht eine Dicke von mindestens 5 mm aufweist.

2. Artikel nach Anspruch 1, wobei die Dicke der ersten Schicht mindestens 75 % der Gesamtdicke des Artikels ausmacht, und vorzugsweise 80 % der Gesamtdicke.

3. Artikel nach Anspruch 1 oder 2, wobei die Dicke der ersten Schicht zwischen 15 mm und 400 mm liegt, vorzugsweise zwischen 20 mm und 300 mm.

4. Artikel nach einem der vorangehenden Ansprüche, wobei die Dicke der zweiten Schicht mindestens 1 % der Gesamtdicke des Artikels ausmacht.

5. Artikel nach einem der vorangehenden Ansprüche, wobei die Dicke der zweiten Schicht zwischen 5 mm und 100 mmm liegt, vorzugsweise zwischen 5 mm und 50 mm, und idealerweise zwischen 10 mm und 30 mm.

6. Artikel nach einem der vorangehenden Ansprüche, wobei das intumeszierende Material mindestens eines der Folgenden umfasst: Ammoniumpolyphosphat-/ Pentaerythrit-Mischungen, Melamin, Guanidin, Chloroparaffine, Phosphine, Phosphonate, Harzbindemittel, Nanoton, expandierbare Glaskügelchen oder expandierbares Graphit.

7. Artikel nach einem der vorangehenden Ansprüche, wobei das feuerfeste Bindemittel ein Phenolharz, Polyurethandispersion, Polyphenol oder ein Phenol-Formaldehyd-Harz umfasst.

8. Artikel nach Anspruch 1 bis 6, wobei das feuerfeste Bindemittel ein Metall, Silikat, Metallaluminat, Metall-Aluminosilikat oder -Zeolith umfasst, vorzugsweise Natriumsilikat.

9. Artikel nach einem der vorangehenden Ansprüche, wobei in der zweiten Schicht der Anteil der expandierten Polystyrol-Kügelchen oder -Partikel als Prozentsatz des Gesamtgewichts dieser Kügelchen, des intumeszierenden Materials und des feuerfesten Bindemittels bei 35 bis 45 Gew.-% liegt.

10. Artikel nach einem der vorangehenden Ansprüche, wobei in der zweiten Schicht der Anteil des intumeszierenden Materials als Prozentsatz des Gesamtgewichts der Kügelchen, des intumeszierenden Materials und des Bindemittels bei 15 bis 25 Gew.-% liegt.

11. Artikel nach einem der vorangehenden Ansprüche, wobei in der zweiten Schicht der Anteil des feuerfesten Bindemittels, jegliche flüssigen Lösungsmittel bzw. Träger ausgenommen, als Prozentsatz des Gesamtgewichts der Kügelchen, des intumeszierenden Materials und des Bindemittels bei 35 bis 45 Gew.-% liegt.

12. Artikel nach einem der vorangehenden Ansprüche, wobei eine oder beide der ersten und zweiten Schichten ein athermanes Material umfassen, vorzugsweise ein Metalloxid, Metallpuder, kalziniertes Erdölkoks, Industrieruß, Kohlenstoffnanoröhre oder Graphit.

## Revendications

1. Article comprenant une mousse de polystyrène expansé, qui comprend :
une première couche comprenant au moins 90 % en poids de billes ou de particules de polystyrène expansé ;
et
une deuxième couche fixée à la première couche et comprenant 25 à 75 % en poids de billes ou de particules de polystyrène expansé, un matériau intumescent et un liant résistant au feu,
dans lequel l'épaisseur de la première couche est d'au moins 20 % de l'épaisseur totale de l'article, et la deuxième couche a une épaisseur d'au moins 5 mm.

2. Article selon la revendication 1, dans lequel l'épaisseur de la première couche est d'au moins 75 % de l'épaisseur totale de l'article, et de préférence d'au moins 80 % de l'épaisseur totale.

3. Article selon la revendication 1 ou la revendication 2, dans lequel l'épaisseur de la première couche se situe entre 15 et 400 mm, de préférence entre 20 et 300 mm.

4. Article selon l'une quelconque des revendications précédentes, dans lequel l'épaisseur de la deuxième couche est d'au moins 1 % de l'épaisseur totale de l'article.

5. Article selon l'une quelconque des revendications précédentes, dans lequel l'épaisseur de la deuxième couche se situe entre 5 et 100 mmm, de préférence entre 5 et 50 mm et idéalement entre 10 et 30 mm.

6. Article selon l'une quelconque des revendications précédentes, dans lequel le matériau intumescent comprend au moins l'un de mélanges de polyphosphate ammonium /pentaérythritol, mélamine, guanidines, chloroparaffines, phosphines, phosphonates, liants résineux, nano-argiles, des billes de verre extensible et du graphite expansible.

7. Article selon l'une quelconque des revendications précédentes, dans lequel le liant résistant au feu comprend une résine phénolique, une dispersion de polyuréthane, un polyphénol ou une résine phénol-formaldéhyde.

8. Article selon l'une quelconque des revendications 1 à 6, dans lequel le liant résistant au feu comprend un silicate, un métal, un aluminate métallique, un aluminosilicate métallique ou une zéolite, de préférence du silicate de sodium.

9. Article selon l'une quelconque des revendications précédentes, dans lequel dans la deuxième couche la proportion des billes ou des particules de polystyrène expansé sous forme d'un pourcentage du poids total desdites billes, du matériau intumescent et du liant résistant au feu se situe entre 35 à 45 % en poids.

10. Article selon l'une quelconque des revendications précédentes, dans lequel dans la deuxième couche la proportion de matériau intumescent sous forme d'un pourcentage du poids total des billes, du matériau intumescent et du liant se situe entre 15 à 25 % en poids.

11. Article selon l'une quelconque des revendications précédentes, dans lequel dans la deuxième couche la proportion du liant résistant au feu, excluant tout solvant ou support liquide, sous forme d'un pourcentage du poids total des billes, du matériel intumescent et du liant se situe entre 35 et 45 % en poids.

12. Article selon l'une quelconque des revendications précédentes, dans lequel une ou les deux première et deuxième couches contiennent additionnellement un matériau athermane, de préférence un oxyde de métal, une poudre métallique, de la coke de pétrole calcinée, du noir de charbon, des nanotubes de carbone ou de graphite.
